# EUROPEAN PATENT SPECIFICATION

(11) **EP 2 660 910 B1**
(45) Date of publication and mention of the grant of the patent: **07.11.2018**
(21) Application number: 11853160.7
(22) Date of filing: 17.11.2011
(51) Int. Cl.: H01M 8/02, H01M 8/10, H01M 8/0247, H01M 8/0265, H01M 8/1007, H01M 4/68, H01M 8/0241, H01M 8/0258, H01M 4/86, H01M 8/1018

(54) **FUEL CELL**
BRENNSTOFFZELLE
PILE À COMBUSTIBLE

(30) Priority: 27.12.2010 JP 2010289600
(43) Date of publication of application: 06.11.2013
(73) Proprietor: NISSAN MOTOR CO., LTD., Yokohama-shi, Kanagawa 221-0023 (JP)
(72) Inventor: YOSHIZAWA, Koudai, Atsugi-shi,Kanagawa 243-0123 (JP)
(74) Representative: Hoefer & Partner Patentanwälte mbB
(86) International application number: PCT/JP2011/076521
(87) International publication number: WO 2012/090618

(56) References cited:
- EP-A1- 1 919 015
- WO-A1-2005/109556
- JP-A- 2 155 171
- JP-A- 2008 146 947
- JP-A- 2009 026 476
- JP-A- 2010 129 299
- JP-A- 2010 129 299

## Description

### Technical field

The present invention relates to a fuel cell in which a plurality of porous ribs made porous at least in part are disposed in a gas passage for circulating two types of gases for power generation.

### Background Art

As this type of fuel cell, one configuration is disclosed as described in Patent Document 1 (Japanese Laid-Open Patent Application Publication No. 2010-129299).
The fuel cell described in Patent Document 1 is provided with a separator substrate or base member and formed with a gas passage in the surface of the separator base member for gas for power generation. The fuel cell is further provided with a plurality of projections made of porous material including conductive particles of 0.5µm to 50 µm particle diameter with the porosity of the projections within a range between 65 to 90%. The patent documents JP 2009 026476 A, WO 2005/109556 A1 and EP1919015 A1 also disclose fuel cell systems comprising porous members in the gas passage of a separator.

### SUMMARY OF THE INVENTION

### PROBLEM TO BE SOLVED BY THE INVENTION

However, in the conventional fuel cell that is described in Patent Document 1, since the gas for power generation is likely to flow into the space between the projections than in the projections and the gas for power generation is less likely to pass into the projection, thus gas for power generation cannot diffuse into a catalyst layer near the projections so that the problem remains unsolved that the catalyst layer cannot function sufficiently.

The present invention has the purpose of providing a fuel cell that may increase the amount of gas for power generation passing through the porous body (porous rib) and may further improve the oxygen diffusibility into the catalyst layers near porous body and thereby increase cell voltage by reducing the resistance overvoltage.

### MECHANISM FOR SOLVING THE PROBLEM

According to the invention, the object is solved by the features of the main claim. The sub-claims contain further preferred developments of the invention.

In order to solve the problem described above, according to the present invention, a pair of separators are disposed on both surfaces of a cell assembly comprised of anode and cathode laminated on both sides of electrolyte membrane, and passages are partitioned to be formed in the surfaces of the separators for circulating two types of gas for power generationes. Further, a plurality of ribs which are made porous at least partly are disposed between each separator and the cell assembly, wherein at least part of the plurality of the porous ribs are disposed successively on the entire cross-section of gas channel in a direction crossing with the flow direction of the gas for power generation.

### EFFECT OF THE INVENTION

According to the present invention as defined in claim 1, since all of the gas for power generation passes through the porous ribs, the amount of gas for power generation passing through in the porous ribs may be increased with the oxygen gas diffusibility into the catalyst layer near the porous ribs improved, and cell voltage may be increased by reducing resistance overvoltage.

### BRIEF DESCRIPTION OF THE DRAWINGS

Fig. 1 is a cross-sectional view of a fuel cell in one embodiment according to the present invention.
Fig. 2 is a plan view of a separator of the above fuel cell forming an example of array pattern of porous ribs.
Fig. 3 is a plan view of a separator forming an array pattern of porous ribs pertaining to a first modification.
Fig. 4 Is a partial perspective view showing an array pattern of porous ribs pertaining to a second modification.
Fig. 5 is a partial perspective view showing an array pattern of porous ribs pertaining to a third modification.
Fig. 6 is a partial perspective view showing an array pattern of porous ribs pertaining to a comparative example.
Fig. 7 is a partial perspective view showing a porous rib pertaining to the comparative example and an array pattern thereof.
Fig. 8 is an explanatory diagram showing an array pattern of porous ribs pertaining to a fourth modification.
Fig. 9 is an explanatory diagram showing an array pattern of porous ribs pertaining to a fifth modification.
Fig. 10 is an explanatory diagram showing an array pattern of porous ribs pertaining to a sixth modification.
Fig. 11 is a partial exploded view showing an example of porous ribs configuring the array pattern in each embodiment.
Fig. 12 is a partial perspective view showing an array pattern of porous ribs pertaining to a seventh modification.

### CONFIGURATION FOR CARRYING OUT THE INVENTION

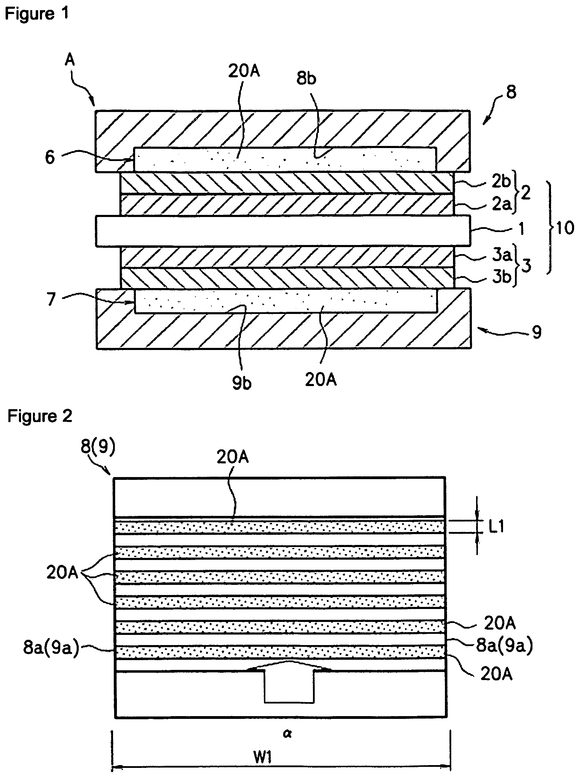

Configuration for carrying out the present invention is now described with reference to the drawings. Fig. 1 is a cross-sectional view of a fuel cell in one embodiment according to the present invention.

Fig. 2 is a plan view of a separator of the above fuel cell forming an example of array pattern of porous ribs.

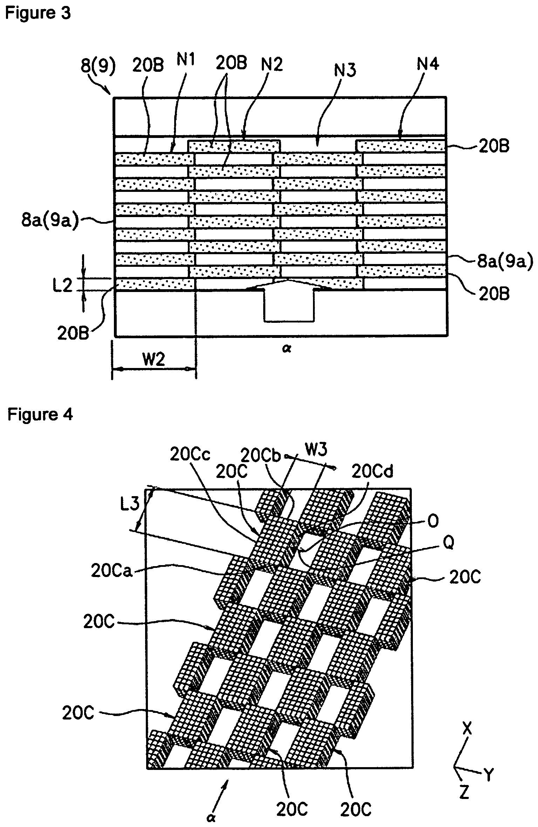

Fig. 3 is a plan view of a separator forming an array pattern of porous ribs pertaining to a first modification.

As shown in Figure 1, in the fuel cell A pertaining to the first embodiment according to the present invention, a pair of separators 8, 9 are disposed so that gas passages or channels 5, 7 for respectively circulating two types of gaes for power generation on both surfaces of a cell assembly or structure 10.

The cell structure 10 is an integral structure formed with cathode 2 and anode 3 bonded on both sides of a solid polymer electrolyte 1.

Cathode 2 has a two-layer structure with a cathode catalyst layer 2a and anode gas diffusion layer 2b, and
the cathode catalyst layer 2a is contacted with one surface of the solid polymer electrolyte membrane 1.

Anode 3 has a two-layer structure with an anode catalyst 3a and anode gas diffusion layer 3b, and the catalyst layer for fuel electrode is brought into contacted with the other surface of the solid polymer electrolyte membrane1.

In the present embodiment, between separators 8, 9 and cell structure 10, i.e., in the gas passages or channels 6, 7 described above, a plurality of porous ribs 20A, 20A are respectively disposed which constitute an example of array pattern of porous ribs. Further, at least a portion of the porous ribs 20A is arrayed in a succession or continuously over the entire cross-section of gas passage in a direction crossing the flow direction of the gas for power generation.

In the present embodiment, all the porous ribs 20A are disposed across the entire surface of cross-section of gas passages 6, 7 in a direction perpendicular to the flow direction of the gas for power generation.

First, in an example of array pattern of porous ribs 20A, porous rib 20A is structured by a body of porous metal which is made porous entirely with a predetermined porosity, and formed on the inner surfaces 8b, 9b of separator 8,9 facing the cell structure 10.

As shown in Fig. 2, the porous rib described above is shaped in an elongate square pole with a length W1 along the long side extending between both peripheral edges 8a, 8a (9a,9a) of separator 8(9) (hereinafter,. referred to as "rib width") as well as a length of short side (L1), (hereinafter,. called " rib lengths") in the flow direction α of the gas for power generation.

That is, in the present embodiment, a plurality of porous ribs 20A are arranged or arrayed with a predetermined interval in the flow direction α so that all the gas for power generation passes through porous ribs 20A.

In addition, with respect to relationship between porous ribs 20A and gas passage or channel 6 (7), the ratio of gas passage 6 '7 compared to the volume of the porous ribs 20A is set between 1 and 3.

Note that the "predetermined interval" may include, in addition to a constant or regular interval, further with respect to flow direction α from upstream to downstream, such an array with gradual decrease in intervals, or conversely, with gradual increase in intervals.

It should be noted that, in addition to the regular intervals from the upstream side toward the downstream side of each flow direction a, ribs are also spaced so as to be gradually narrower, for example, "a predetermined distance", and this is gradually wider spacing to be reversed and the like in which to array.

By the array pattern of porous ribs describe above, all the gas for power generation flowing through the fuel cell A may be configured to pass porous ribs 20A.

Therefore, the amount of gas that passes through inside the porous ribs 20A may be increased with the improved diffusibilty of oxygen into the catalyst layer near the porous ribs 20A and the voltage increase of fuel cell A may be achieved by reducing resistance overvoltage.

In the array pattern of porous ribs pertaining to the first modification in Fig. 3, similar to the porous rib 20A above, porous ribs 20B are entirely formed in the porous metal body with a required gas permeability and formed on the inner surfaces 8a, 9b of the separators 8, 9 facing the cell structure 10.

The porous rib 20B constituting an array pattern of porous ribs pertaining to the first modification is formed into an elongate square pole and has a length along long edge (referred to as "rib width") by dividing the length extending between both side edges 8, 8a(9,9a) of separator 8 (9) into a plurality to rib width W2, and has a length L2 along the flow direction α of gas for power generation.

The porous ribs are arranged in four rows indicated by reference signs, N1 ∼ N4, and then the interval between adjacent rows is designed slightly shorter than the rib width W2 of porous rib 20B disposed with a predetermined interval between the plurality of ribs in the flowing direction α. In other words, the porous ribs 20B are arranged across the entire cross-section of gas passages 6, 7 perpendicular to the flow of direction of gas for power generation.

By making up the array pattern of porous ribs 20B as described above, all the gas for power generation may be forced to pass through the porous ribs 20B.

Therefore, the amount of gas fro power generation passing through porous rib 20B may be increased, and oxygen diffusibilty into catalyst layer near the porous ribs 20B may be improved with increase of cell voltage due to reduction in resistance overvoltage. Further, since the array pattern in the first modification is in so called a staggered manner, pressure loss may be reduced.

Fig. 4 Is a partial perspective view showing an array pattern of porous ribs pertaining to a second modification.

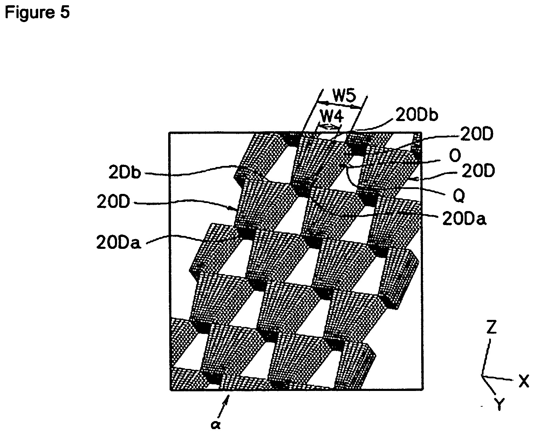

Fig. 5 is a partial perspective view showing an array pattern of porous ribs pertaining to a third modification.

The porous ribs 20C constituting an array pattern of porous ribs pertaining to the second modification shown in Fig. 4 is similar to the porous ribs 20A, 20B in that the porous ribs 20C are disposed between the separators 8, 9 described above and cell structure 10, i.e., in the gas passages or channels 6, 7.

The porous rib 20C constituting the array pattern of porous ribs pertaining to the present example has a length W3 of side edges at upstream and downstream sides, 20Ca, 20Cb (hereinafter, referred to as "rib width") perpendicular to the flow of direction a, and a length L3 of the edges 20Cc, 20Cd parallel to the flow of direction α (hereinafter,. referred to as "rib length") L3, and formed of rectangular shape with a predetermined thickness.

In the present example, the rib width W3 of upstream and downstream side edges 20Ca, 20Cb Is set to less than 100µm with an average rib width W3 of upstream and downstream side edges 20Ca, 20Cb and side edge 20Cc, 20Cd being set to generally equal to rib length L3. In other words, an aspect ratio of upstream, downstream side edge 20Ca, 20Cb to edge 20Cc, 20Cd is set to approximately 1.

Further, with respect to porous ribs 20C and gas passage 6 (7), a ratio of the volume of gas passage with respect to volume of porous ribs 20C is set between 1 and 3, and porous ribs are arranged to form a staggered pattern in which the apex portions contact each other.

In other words, porous ribs are arranged in the gas passage 6, 7 across the entire cross-section area of gas passage 6, 7 perpendicular to the flow direction of gas for power generation.

Furthermore, in the flow path or passage formed between the adjacent porous ribs 20C, 20C, the minimum length Q between the side surface of upstream and downstream side edges 20Cc, 20Cd and the center of flow passage O is equal to or less than 200µm.

By making up the array pattern of porous ribs 20C as described above, all the gas for power generation may be forced to pass through the porous ribs 20C.

Although the average velocity of gas for power generation passing through porous ribs 20C is less than the average velocity of gas for power generation circulating the surrounding space, it is possible to increase the amount of gas for power generation passing through the porous ribs 20C and oxygen diffusibilty into the catalyst layers near the porous ribs 20 may be increased with achieving increase in cell voltage by reducing resistance overvoltage.

The porous ribs 20D constituting an array pattern of porous ribs pertaining to the third modification shown in Fig. 5 is similar to the porous ribs 20A to 20C in that the porous ribs 20D are disposed between the separators 8, 9 described above and cell structure 10, i.e., in the gas passages or channels 6, 7.

The porous rib 20D constituting the array pattern of porous ribs pertaining to the present example is formed in a trapezoidal shape in plan view of a predetermined thickness and with the length W4, W5 (hereinafter referred to "rib width") along the edge 20Da, 20Db perpendicular to the flow direction α described above such that W4 is less than W5 (i.e., W4 < W5).

In other words, with respect to the flow direction α of gas for power generation, the gas passage area is shaped or configured to increase.

Further, with respect to porous ribs 20D and gas passage 6 (7), a ratio of the volume of gas passage with respect to volume of porous ribs 20D is set between 1 and 3, and porous ribs are arranged to form a staggered pattern in which the apex portions contact each other.

In other words, porous ribs are arranged in the gas passage 6, 7 across the entire cross-section area of gas passage 6, 7 perpendicular to the flow direction of gas for power generation.

By making up the array pattern of porous ribs 20D as described above, all the gas for power generation may be forced to pass through the porous ribs 20D.

Although the average velocity of gas for power generation passing through porous ribs 20D is less than the average velocity of gas for power generation circulating the surrounding space, it is possible to increase the amount of gas for power generation passing through the porous ribs 20D and oxygen diffusibilty into the catalyst layers near the porous ribs 20 may be increased while achieving increase in cell voltage by reducing resistance overvoltage.

Further, in the porous ribs 20D, since the passage area of the gas for power generation is shaped to increase with respect to the flow directionα α from the upstream side to the downstream side, the gas for power generation passing through the porous rib 20D is imparted directivity.

Furthermore, by passing obliquely in the porous rib 20D, even with such a porous rib with low permeability with respect to gas passage, the flow velocity of gas for power generation may be increased.

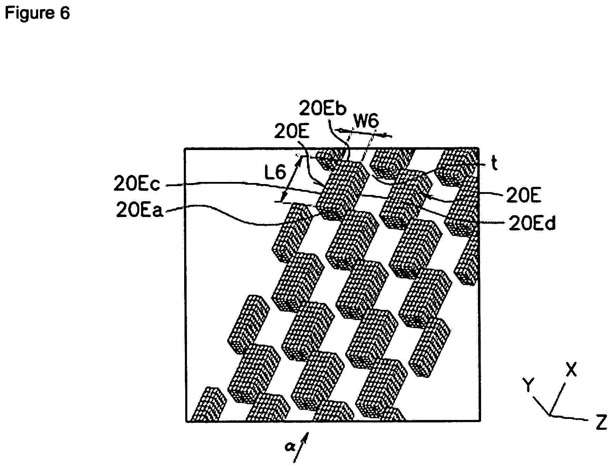

Fig. 6 is a partial perspective view showing an array pattern of porous ribs pertaining to a comparative example.

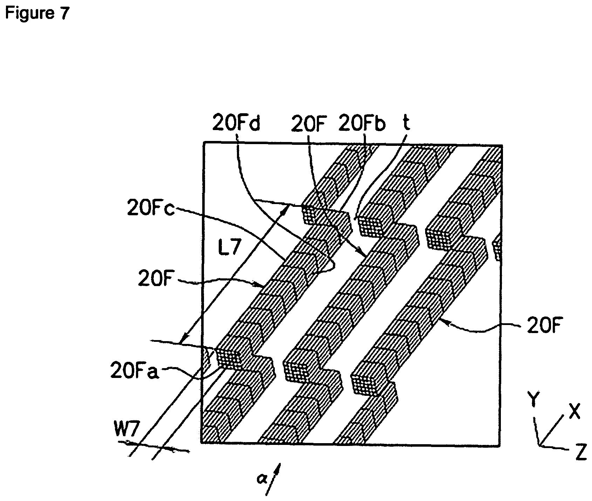

Fig. 7 is a partial perspective view showing a porous rib pertaining to the comparative example and an array pattern thereof..

The porous ribs 20E pertaining to comparative example shown in Fig. 6 is similar to the porous ribs 20A to 20D in that the porous ribs 20E are disposed between the separators 8, 9 described above and cell structure 10, i.e., in the gas passages or channels 6, 7.

The porous rib 20E pertaining to the present example has a rib width W6 of the upstream and downstream side edges 20Ea, 20Eb perpendicular to the flow direction α described above and rib length L6 of edges 20Ec, 20Ed parallel to the flow direction a, and further formed in rectangular shape of required thickness.

The porous rib 20E pertaining to the present example has set the rib width W6 of the upstream and downstream side edges 20Ea, 20Eb at 100 µm or less, and the average rib width and rib length measured along upstream and downstream side edges 20Ea, 20Eb, and edges 20Ec, 20Ed respectively. are configured to be generally equal.

Further, with respect to porous ribs 20E and gas passage 6 (7), a ratio of the volume of gas passage with respect to volume of porous ribs 20D is set between 1 and 3, and porous ribs are arranged to form a staggered pattern in which the apex portions are spaced apart from each other by a predetermined gas t.

More specifically, the gap t is set smaller than the rib width W6 of each porous rib 20E.

By making up the array pattern of porous ribs 20E as described above, almost all the gas for power generation may be forced to pass through the porous ribs 20E. Although the average velocity of gas for power generation passing through porous ribs 20E is less than the average velocity of gas for power generation circulating the surrounding space, it is possible to increase the amount of gas for power generation passing through the porous ribs 20E and oxygen diffusibilty into the catalyst layers near the porous ribs 20 may be increased with achieving increase in cell voltage by reducing resistance overvoltage.

The porous ribs 20F pertaining to comparative example shown in Fig. 7 is similar to the porous ribs 20A to 20E in that the porous ribs 20F are disposed between the separators 8, 9 described above and cell structure 10, i.e., in the gas passages or channels 6, 7.

The porous rib 20F pertaining to the present example has a rib width W7 of the upstream and downstream side edges 20Fa, 20Fb perpendicular to the flow direction α described above and rib length L7 of edges 20Fc, 20Fd parallel to the flow direction a, and further formed in rectangular shape of required thickness

The porous rib 20F pertaining to the present example has set the rib width W7 of the upstream and downstream side edges 20Fa, 20Fb at 100µm or less, and, with respect to porous ribs 20F and gas passage 6 (7), a ratio of the volume of gas passage with respect to volume of porous ribs 20F is set beyond 3. Thus, compared to the arrangement with the ratio between 1 and 3, the structure is less vulnerable to damage.

Further, the porous ribs pertaining to this example are arranged to form a staggered pattern in which the apex portions are spaced apart from each other by a predetermined gas t.

More specifically, the gap t is set smaller than the rib width W7 of each porous rib 20E.

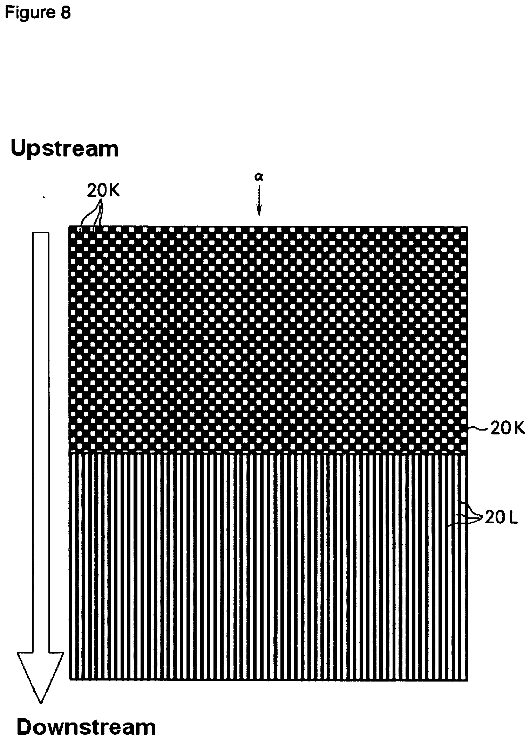

Fig. 8 is an explanatory diagram showing an array pattern of porous ribs pertaining to a fourth modification.

In the array pattern of porous ribs pertaining to the fourth modification, on a half portion upstream with respect to flow direction α of gas for power generation, as in the array pattern of porous ribs according to either first modification or second modification, porous ribs 20K are arranged in a staggered manner with the adjacent porous ribs 20K contacting closely each other whereas on the other half portion downstream with respect to the flow direction of gas for power generation, the porous ribs 20L are arranged parallel to flow direction α and with a predetermined regular intervals.

According to this arrangement in array pattern, since the staggered array is formed only in a portion of the gas flow path, pressure loss may be reduced, and, as a result of reducing the pressure loss, auxiliary load is reduced thereby increasing the output of the fuel cell A.

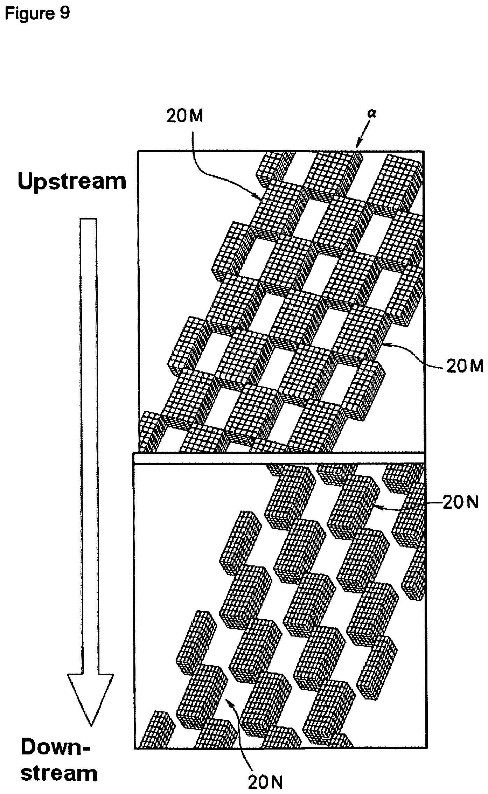

Fig. 9 is an explanatory diagram showing an array pattern of porous ribs pertaining to a fifth modification.

In the array pattern of porous ribs pertaining to the fifth modification, on a half portion upstream with respect to flow direction α of gas for power generation, as in the array pattern of porous ribs according to either first modification or second modification, porous ribs 20M are arranged in a staggered manner with the adjacent porous ribs 20M contacting closely each other whereas on the other half portion downstream with respect to the flow direction of gas for power generation, the porous ribs 20N are arranged in a staggered manner with the adjacent porous ribs 20N spaced from each other with a required spacing.

According to this arrangement in array pattern, since the staggered array is formed only partly in the gas flow path, pressure loss may be reduced, and, as a result of reducing the pressure loss, auxiliary load is reduced thereby increasing the output of the fuel cell A.

Further, electric resistance may be reduced on the upstream half portion, and while reducing the oxygen resistance on the downstream half portion, liquid water may be discharged as well.

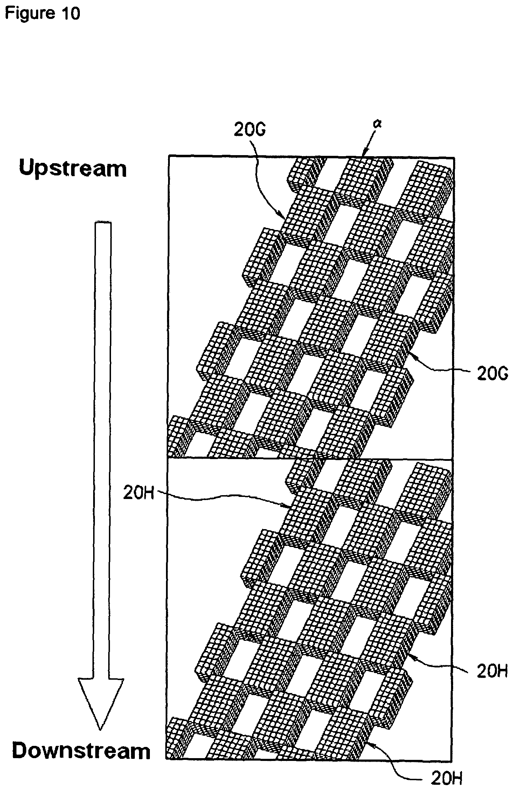

Fig. 10 is an explanatory diagram showing an array pattern of porous ribs pertaining to a sixth modification.

In the array pattern of porous ribs pertaining to the sixth modification, on a half portion upstream with respect to flow direction α of gas for power generation, porous ribs 20G of small gas permeability are disposed in a staggered manner while being in contact with each other whereas on the other half portion downstream with respect to the flow direction of gas for power generation, the porous ribs 20H of a larger permeability than that disposed on the upstream side are arranged in a staggered manner while being contact with each other.

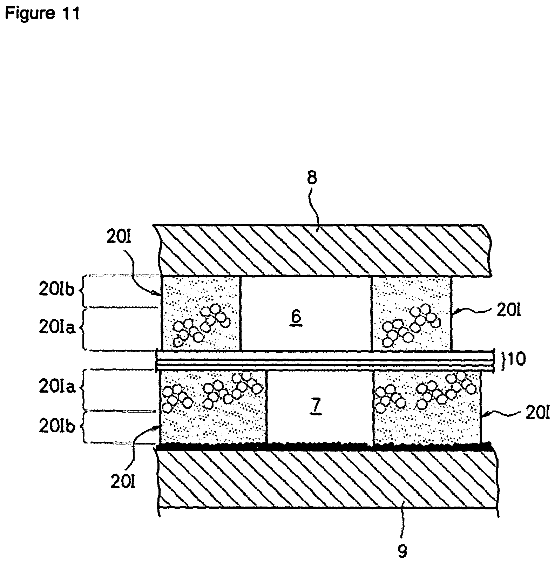

Fig. 11 is a partial exploded view showing an example of porous ribs configuring the array pattern in each embodiment. Note that, with respect to parts equivalent to those described in the above embodiments, the same reference signs are attached without the accompanying descriptions.

In the porous ribs 20I pertaining to this example, the gas permeability is varied from the side of cell structure 10 toward the separator 10.

More specifically, the rib is made porous on the base end side half portion 20Ia on the side of the cell structure 10, and the tip end side 201b is made solid.

With this configuration, it is possible to reduce the electrical resistance of the porous rib 201. In this way, it is possible to reduce the resistance overvoltage so as to improve the voltage of the fuel cell A.

Note that the present invention is not limited to the embodiments described above, but the following modifications are possible.

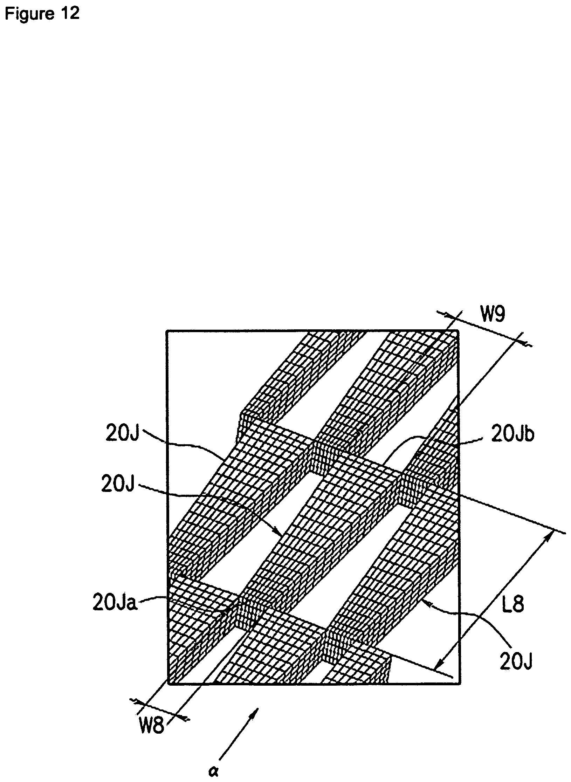

Fig. 12 is a partial perspective view showing an array pattern of porous ribs pertaining to a seventh modification.

The porous ribs 20J pertaining to the seventh modification constituting an array pattern of porous ribs shown in Fig. 12 is similar to the porous ribs 20A to 20I in that the porous ribs 20J are disposed between the separators 8, 9 described above and cell structure 10, i.e., in the gas passages or channels 6, 7.

The porous rib 20J constituting the array pattern of porous ribs pertaining to the present example is formed in a trapezoidal shape in plan view of a predetermined thickness and with the length W8, W9 (hereinafter referred to "rib width") along the edge 20Ja, 20Jb perpendicular to the flow direction α described above such that W8 is less than W9 (i.e., W8 < W9) further with the length L8 between edges 20Ja and 20Jb..

In other words, with respect to the flow direction α of gas for power generation, the gas passage area is shaped to increase.

Furthermore, in the present example, porous ribs are arranged to form a staggered pattern in which the apex portions contact each other.

In other words, porous ribs 20J are arranged in the gas passage 6, 7 across the entire cross-section area of gas passage 6, 7 perpendicular to the flow direction of gas for power generation.

The rib width W 8 of the upstream and downstream side edges 20Ja, 20Jb is set at 100 µm or less, and, the aspect ratio between upstream and downstream side edges 20Ja, 20Jb and edges 20Cc,20Cd is set beyond 3. Thus, compared to the arrangement with the ratio between 1 and 3, the structure is less vulnerable to damage.

By the porous rib 20J constituting the array pattern described above, the amount of gas for power generation passing through the 20J may be forced to porous ribs 20J. Therefore, the amount of gas passing through inside the porous ribs may be increased, and the oxygen diffusion into the catalyst layer closest to porous ribs 20J is enhanced to improve the cell voltage by reducing the resistance overvoltage.

Further, in the porous ribs 20J, since the gas passage area of power generation is shaped to increase with respect to the flow directionα from the upstream side to the downstream side, the gas for power generation passing through the porous rib 20J is imparted directivity.

Furthermore, by passing gas obliquely in the porous rib 20J, even with such a porous rib of low permeability with respect to gas passage, the flow velocity of gas for power generation may be increased.

In the above described embodiments, the examples have been described with an array of porous ribs on the inner surface of separator disposed upon the cell structure. However, the porous ribs may be formed on the cell structure.

Two or more kinds of porous ribs different in contour from one another may be disposed to be mixed from the upstream side toward the downstream side in the flow direction of the gas for power generation.

### DESCRIPTION OF REFERENCE SIGNS

- 1: Electrolyte membrane
- 2: Cathode
- 3: Anode
- 6,7: Gas passage
- 8,9: Separator
- 10: Cell structure
- 20A ∼ 20F: Porous rib
- α: Flow of direction of gas for power generation

## Claims

1. A fuel cell, comprising:
a pair of separators (8, 9) disposed on both surfaces of a cell structure (10) which is comprised of anode (3) and cathode (2) laminated on both sides of an electrolyte membrane (1), passages (6, 7) being partitioned to be formed in the separators (8, 9) for circulating two types of gas for power generations;
a plurality of ribs (20A-20F) which are made porous at least partly and disposed between each separator (8, 9) and the cell structure (10) wherein at least part of the plurality of the porous ribs (20A-20F) are disposed successively on the entire cross-section of the gas passage (6, 7) in a direction crossing with the flow direction of the gas (α) for power generation **characterized in that** all the gas for power generation passes through the porous ribs (20A-20F), wherein
either the at least part of the plurality of porous ribs (20A) are shaped in an elongate square pole extending between both peripheral edges (8a, 8a) (9a, 9a) of the separator (8, 9)
or wherein the at least part of the plurality of porous ribs (20B-20F) are arranged in a staggered manner with adjacent porous ribs (20A-20F) contacting each other.

2. The fuel cell according to claim 1, wherein the ratio of the volume of the gas passage (6, 7) with respect to the volume of porous ribs (20A-20F) is set between 1 and 3.

3. The fuel cell according to claim 1 or 2, wherein the average rib width is approximately equal to the rib length.

4. The fuel cell according to any one of claims 1-3, wherein the rib width of the porous rib (20A-20F) is configured to be increased from the upstream side toward the downstream side in the flow direction of the gas (α) for power generation.

5. The fuel cell according to any one of claims 1-4, wherein the porous ribs (20A-20F) are disposed on the upstream side with respect to the flow direction of gas (α) for power generation.

6. The fuel cell according to any one of claims 1-5, wherein the gas permeability of the porous ribs is varied with respect to the flow direction of the gas (α) for power generation.

7. The fuel cell according to claim 6, wherein the gas permeability is increased gradually from the upstream side to the downstream side with respect to the flow direction of the gas (α) for power generation.

8. The fuel cell according to any one of claims 1-7, wherein the gas permeability is varied from the cell structure (10) toward the side of the separator (8,9).

9. The fuel cell according to any one of claims 1-8, wherein two or more kinds of porous ribs (20A-20F) different in contour from one another are disposed mixedly from the upstream side toward the downstream side in the flow direction of the gas (α) for power generation.

## Patentansprüche

1. Brennstoffzelle, umfassend:
ein Paar von Separatoren (8, 9), die auf beiden Oberflächen einer Zellstruktur (10) angeordnet sind, die aus einer Anode (3) und einer Kathode (2) zusammengesetzt ist, die auf beide Seiten einer Elektrolytmembran (1) laminiert sind, Kanäle (6, 7), die zum Bilden in den Separatoren (8, 9) zum Umwälzen von zwei Gas-Arten für die Stromerzeugung unterteilt sind;
eine Vielzahl von Rippen (20A-20F), die zumindest teilweise porös hergestellt sind und zwischen jedem Separator (8, 9) und der Zellstruktur (10) angeordnet sind, wobei zumindest ein Teil der Vielzahl der porösen Rippen (20A-20F) nacheinander auf dem gesamten Querschnitt des Gaskanals (6, 7) in einer Richtung quer zur Strömungsrichtung des Gases (a) zur Stromerzeugung angeordnet sind, **dadurch gekennzeichnet, dass** das gesamte Gas zur Stromerzeugung durch die porösen Rippen (20A-20F) strömt, wobei
entweder der zumindest eine Teil der Vielzahl von porösen Rippen (20A) in einen länglichen quadratischen Pol geformt ist, der sich zwischen den beiden Umfangsrändern (8a, 8a) (9a, 9a) des Separators (8, 9) erstreckt,
oder wobei der zumindest eine Teil der Vielzahl von porösen Rippen (20B-20F) versetzt angeordnet ist, wobei sich angrenzende poröse Rippen (20A-20F) gegenseitig berühren.

2. Brennstoffzelle nach Anspruch 1, wobei das Verhältnis des Volumens des Gaskanals (6, 7) in Bezug auf das Volumen der porösen Rippen (20A-20F) zwischen 1 und 3 festgelegt ist.

3. Brennstoffzelle nach Anspruch 1 oder 2, wobei die durchschnittliche Rippenbreite ungefähr gleich der Rippenlänge ist.

4. Brennstoffzelle nach einem der Ansprüche 1 bis 3, wobei die Rippenbreite der porösen Rippe (20A-20F) so konfiguriert ist, dass sie von der stromaufwärtsseitigen Seite zur stromabwärtsseitigen Seite in der Strömungsrichtung des Gases (α) für die Stromerzeugung zunimmt.

5. Brennstoffzelle nach einem der Ansprüche 1 bis 4, wobei die porösen Rippen (20A-20F) auf der stromaufwärtsseitigen Seite in Bezug auf die Strömungsrichtung des Gases (a) zur Stromerzeugung angeordnet sind.

6. Brennstoffzelle nach einem der Ansprüche 1-5, wobei die Gasdurchlässigkeit der porösen Rippen in Bezug auf die Strömungsrichtung des Gases (a) zur Energieerzeugung variiert.

7. Brennstoffzelle nach Anspruch 6, wobei die Gasdurchlässigkeit von der stromaufwärtsseitigen Seite zu der stromabwärtsseitigen Seite in Bezug auf die Strömungsrichtung des Gases (a) zur Stromerzeugung graduell zunimmt.

8. Brennstoffzelle nach einem der Ansprüche 1-7, wobei die Gasdurchlässigkeit von der Zellstruktur (10) zur Seite des Separators (8, 9) variiert.

9. Brennstoffzelle nach einem der Ansprüche 1-8, wobei zwei oder mehr Arten der porösen Rippen (20A-20F), die sich in ihrer Kontur voneinander unterscheiden, von der stromaufwärtsseitigen Seite zur stromabwärtsseitigen Seite in der Strömungsrichtung des Gases (a) für die Stromerzeugung gemischt angeordnet sind.

## Revendications

1. Pile à combustible, comprenant :
une paire de séparateurs (8, 9) disposés sur les deux surfaces d'une structure de pile (10) qui est constituée d'une anode (3) et d'une cathode (2) stratifiées sur les deux côtés d'une membrane électrolytique (1), des passages (6, 7) étant partitionnés pour être formés dans les séparateurs (8, 9) afin de faire circuler deux types de gaz pour des productions d'énergie ;
une pluralité de nervures (20A-20F) qui sont rendues poreuses au moins partiellement et qui sont disposées entre chaque séparateur (8, 9) et la structure de pile (10), où au moins certaines de la pluralité de nervures poreuses (20A-20F) sont disposées successivement sur toute la section transversale du passage de gaz (6, 7) dans une direction croisant la direction d'écoulement du gaz (α) pour la production d'énergie, **caractérisée en ce que**
tout le gaz la production d'énergie passe à travers les nervures poreuses (20A-20F), où
soit les au moins certaines de la pluralité de nervures poreuses (20A) sont conformées en un pôle carré allongé s'étendant entre deux bords périphériques (8a, 8a) (9a, 9a) du séparateur (8, 9)
soit les au moins certaines de la pluralité de nervures poreuses (20B-20F) étant agencées en quinconce avec des nervures poreuses adjacentes (20A-20F) en contact les unes avec les autres.

2. Pile à combustible selon la revendication 1, dans laquelle le rapport du volume du passage de gaz (6, 7) par rapport au volume des nervures poreuses (20A-20F) est réglé entre 1 et 3.

3. Pile à combustible selon la revendication 1 ou 2, dans laquelle la largeur moyenne de nervure est approximativement égale à la longueur de nervure.

4. Pile à combustible selon l'une quelconque des revendications 1 à 3, dans laquelle la largeur de nervure de la nervure poreuse (20A-20F) est configurée pour augmenter du côté amont vers le côté aval dans la direction d'écoulement du gaz (α) pour la production d'énergie.

5. Pile à combustible selon l'une quelconque des revendications 1 à 4, dans laquelle les nervures poreuses (20A-20F) sont disposées sur le côté amont par rapport à la direction d'écoulement de gaz (α) pour la production d'énergie.

6. Pile à combustible selon l'une quelconque des revendications 1 à 5, dans laquelle la perméabilité aux gaz des nervures poreuses varie par rapport à la direction d'écoulement du gaz (α) pour la production d'énergie.

7. Pile à combustible selon la revendication 6, dans laquelle la perméabilité aux gaz augmente progressivement du côté amont au côté aval par rapport à la direction d'écoulement du gaz (α) pour la production d'énergie.

8. Pile à combustible selon l'une quelconque des revendications 1 à 7, dans laquelle la perméabilité aux gaz varie de la structure de pile (10) vers le côté du séparateur (8, 9).

9. Pile à combustible selon l'une quelconque des revendications 1 à 8, dans laquelle deux types de nervures poreuses (20A-20F) ou plus, ayant un contour différent l'une de l'autre, sont disposées de façon mélangée du côté amont vers le côté aval dans la direction d'écoulement du gaz (α) pour la production d'énergie.
